# FASCICULE DE BREVET EUROPEEN

(11) **EP 1 307 371 B1**
(45) Date de publication et mention de la délivrance du brevet: **09.01.2008**
(21) Numéro de dépôt: 01940692.5
(22) Date de dépôt: 05.06.2001
(51) Int. Cl.: B60T 11/26, B60T 17/04, B60T 17/22

(54) **DISPOSITIF DE CONNECTION ET SYSTEME D'ALIMENTATION COMPORTANT UN TEL DISPOSITIF.**
VERBINDUNGSVORRICHTUNG UND VERSORGUNGSANLAGE MIT EINER SOLCHEN VORRICHTUNG
CONNECTION DEVICE AND FEEDING SYSTEM COMPRISING SAME

(30) Priorité: 09.06.2000 FR 0008616
(43) Date de publication de la demande: 07.05.2003
(73) Titulaire: ROBERT BOSCH GMBH, 70442 Stuttgart (DE)
(72) Inventeur: DEMERSSEMAN, Rémi, F-75004 PARIS (FR); COME, Philippe, F-60300 SENLIS (FR); GAFFE, François, F-93110 ROSNY-SOUS-BOIS (FR)
(74) Mandataire: Hurwic, Aleksander Wiktor
(86) Numéro de dépôt international: PCT/FR2001/001734
(87) Numéro de publication internationale: WO 2001/094169

(56) Documents cités:
- EP-A- 0 784 177
- FR-A- 2 769 275

## Description

La présente invention se rapporte principalement à un dispositif de connection et de déconnection rapide de canalisations tubulaires flexibles et à un système d'alimentation en liquide de frein comportant un tel dispositif notamment pour l'interconnection, par au moins une canalisation tubulaire flexible d'une pluralité de réservoirs de liquide de frein.

La demande EP 98 944 011.0, No de publication EP 1019272 B1, qui est incorporée dans la présente demande par référence, décrit un dispositif d'alimentation de sécurité pour circuit hydraulique de freinage double comportant un premier réservoir supérieur de grande capacité relié par une canalisation tubulaire souple, unique à un second réservoir inférieur de capacité réduite. Seul le réservoir inférieur de capacité réduite est muni d'une cloison de délimitation de deux volumes séparés de liquide de freinage.

EP 98 944 011.0, No de publication EP 1019272 B1 ne décrit ni ne suggère la mise en oeuvre de connecteurs rapides ni de dispositifs de déconnection rapide de conduites tubulaires flexibles reliant les premier et second réservoirs. Ainsi, d'une part la connection et la déconnection sont des opérations plus longues et, d'autre part, il n'est pas assuré qu'une connection correcte, avec verrouillage a été effectuée.

C'est par conséquent un but de la présente invention d'offrir un système d'alimentation en liquide de frein rapide à assembler et à désassembler.

C'est également un but de la présente invention d'offrir un système d'alimentation en liquide de frein présentant une grande sécurité de fonctionnement.

Ces buts sont atteints par un dispositif de connection et un outil de déconnection rapide de conduite tubulaire flexible sur un réservoir de liquide de frein pour véhicules automobiles.

L'invention a principalement pour objet un dispositif de connection et de déconnection de canalisations tubulaires flexibles à un réservoir de liquide de frein comportant un premier logement de réception d'une bague d'immobilisation axiale de ladite canalisation tubulaire flexible et un second logement de réception et de guidage d'un outil de déconnection, perpendiculairement à l'axe de la canalisation tubulaire flexible à déconnecter, ledit outil de déconnection comportant des rampes axiales aptes à coopérer et à déplacer axialement ladite baguede manière à libérer la canalisation tubulaire flexible.

L'invention a aussi pour objet un dispositif caractérisé en ce que les rampes de l'outil de déconnection sont aptes à pousser axialement ladite bague d'immobilisation de la canalisation tubulaire flexible de manière à libérer ladite canalisation tubulaire flexible.

L'invention a également pour objet un dispositif caractérisé en ce que l'outil de déconnection comporte en outre des montants portant lesdites rampes, lesdits montants ayant, contrairement aux rampes une épaisseur constante dans la direction axiale.

L'invention a aussi pour objet un dispositif caractérisé en ce que l'outil de déconnection est symétrique de manière à être réversible.

L'invention a aussi pour objet un dispositif caractérisé en ce que ledit dispositif assure la connection simultanée d'au moins deux canalisations tubulaires flexibles d'axes parallèles ou sensiblement parallèles.

L'invention a aussi pour objet un dispositif caractérisé en ce qu'il comporte un outil de déconnection comportant des rampes permettant la déconnection simultanée d'au moins deux canalisations tubulaires flexibles.

L'invention a aussi pour objet un dispositif caractérisé en ce que l'outil de déconnection comporte une gorge en U bordée par lesdites rampes axiales.

L'invention a aussi pour objet un réservoir de liquide de frein caractérisé en ce qu'il comporte un dispositif de connection et de déconnection.

L'invention a aussi pour objet un système d'alimentation en liquide de freinage caractérisé en ce qu'il comporte au moins deux réservoirs de liquide de frein reliés par au moins une conduite tubulaire flexible connectée au moins à l'une de ses extrémités par un dispositif.

L'invention a aussi pour objet un système caractérisé en ce que les deux réservoirs sont connectés par au moins deux canalisations tubulaires flexibles.

Avantageusement, le système d'alimentation en liquide de frein selon la présente invention comporte un premier réservoir supérieur relié par une conduite tubulaire flexible, dont la connection est assurée par un connecteur rapide à un second réservoir de liquide de frein inférieur.

L'exemple préféré du dispositif d'alimentation en liquide de frein selon la présente invention est muni d'un premier réservoir supérieur comportant deux capacités de liquide de frein séparées, un second réservoir inférieur de liquide de frein ayant deux capacités séparées .ainsi que deux canalisations tubulaires, une première canalisation tubulaire flexible reliant une première capacité du réservoir supérieur à une première capacité du réservoir inférieur, la seconde canalisation tubulaire reliant la seconde capacité du réservoir supérieur, différente de la première capacité du réservoir supérieur à une seconde capacité du réservoir inférieur différente de la première capacité du réservoir inférieur.

Avantageusement, le second réservoir inférieur est directement solidarisé avec un maître cylindre tandem alors que le réservoir supérieur se trouve dans un endroit aisément visible et/ou accessible par l'utilisateur du véhicule automobile.

Avantageusement, les première et seconde capacités du réservoir supérieur sont étanches l'une par rapport à l'autre mais reliées à l'atmosphère par un conduit de ventilation.

Avantageusement, les première et seconde capacités du réservoir inférieur sont isolées hermétiquement l'une par rapport à l'autre et par rapport à l'atmosphère.

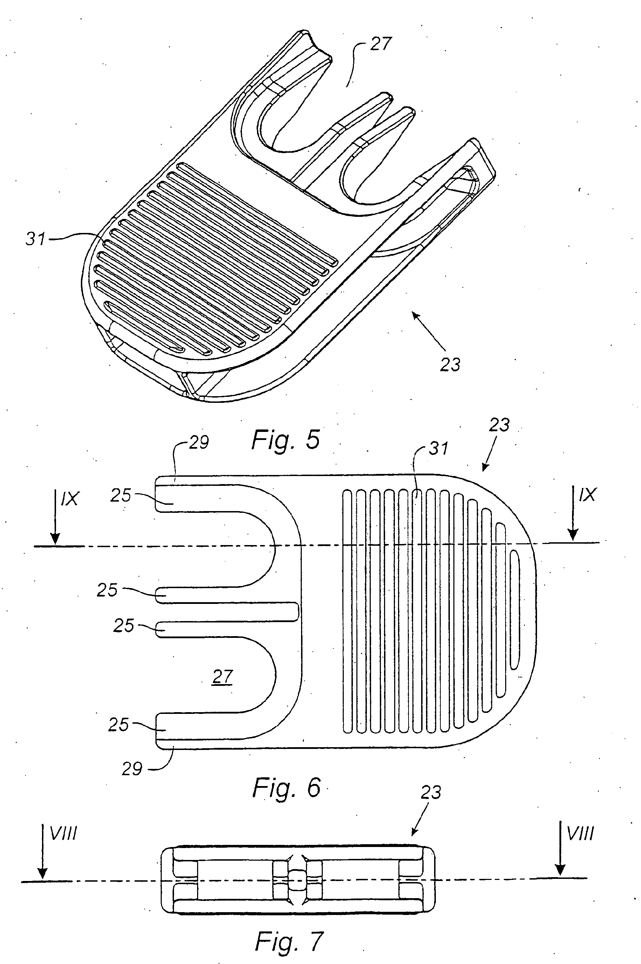

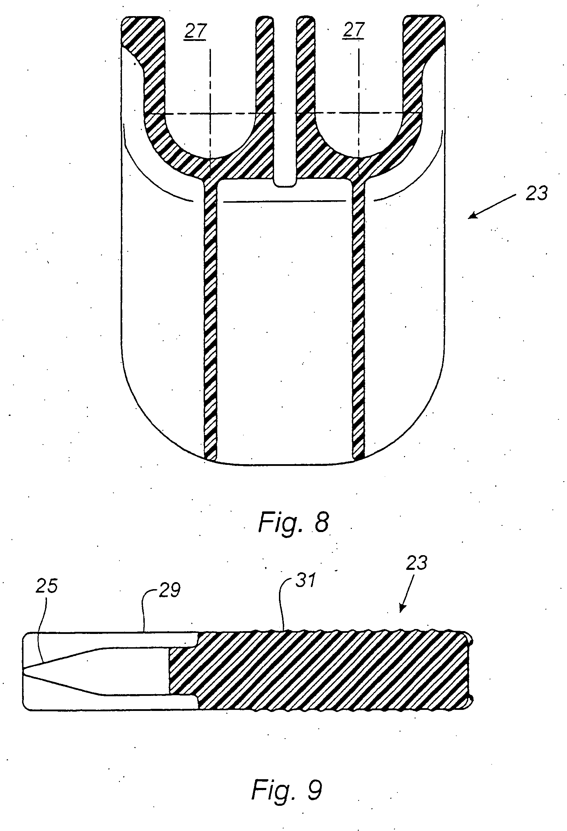

Les opérations de maintenance du véhicule peuvent nécessiter la déconnection des canalisations tubulaires flexibles. L'exemple préféré de réalisation illustrée d'un dispositif 1 de connexion de la présente invention comporte des moyens aptes à coopérer avec un outil 23 de déconnection rapide de canalisation tubulaire flexible. L'outil de déconnection 23 tel qu'illustré sur les figures 5 à 9 comporte par exemple des rampes 25 bordant chacune des deux encoches 27 en U permettant d'appliquer l'outil 23 simultanément sur deux canalisations tubulaires flexibles à déconnecter. Dans l'exemple avantageux illustré, les rampes 25 sont bordées sur les bords externes de l'outil 23 par des montants 29 dont l'épaisseur correspond à l'épaisseur sensiblement constante de l'outil. A l'opposé des encoches 27, l'outil 23 est muni d'une zone de préhension 31 avantageusement striée.

L'invention sera mieux comprise au vu de la description ci-après et des figures annexes sur lesquelles :
La figure 1 est une vue en coupe longitudinale de l'exemple préféré de réalisation d'un réservoir et d'un outil de déconnexion de conduites tubulaires flexibles d'un support pour connecteur rapide coopérant avec le réservoir.
La figure 2 est une vue en perspective de ¾ de l'exemple préféré de réalisation d'un réservoir comportant un support pour connecteur rapide et d'un outil de déconnexion de conduites tubulaires flexibles d'un support pour connecteur rapide selon la présente invention.
La figure 3 est une vue en coupe longitudinale selon un plan perpendiculaire au plan de coupe de la figure 1.
La figure 4 est une vue de dessous d'un réservoir comportant un support pour connecteur rapide.
La figure 5 est une vue en perspective de ¾ de l'exemple préféré de réalisation d'un outil de déconnexion de conduites tubulaires flexibles d'un support pour connecteur rapide selon la présente invention.
La figure 6 est une vue en plan de l'exemple préféré de réalisation d'un outil de déconnexion de conduites tubulaires flexibles d'un support pour connecteur rapide selon la présente invention.
La figure 7 est une vue de côté de l'exemple préféré de réalisation d'un outil de déconnexion de conduites tubulaires flexibles d'un support pour connecteur rapide selon la présente invention.
La figure 8 est une vue en coupe longitudinale de la figure 7 selon le plan de coupe VIII-VIII.
La figure 9 est une vue en coupe transversale de la figure 6 selon le plan de coupe IX-IX.

Dans l'exemple non limitatif illustré, l'outil de déconnection 23 est symétrique par rapport à un plan médian permettant son insertion indifféremment dans les deux sens. Toutefois, il est bien entendu qu'un outil non symétrique par rapport à son plan médian principal ne sort pas du cadre de la présente invention. De même, dans l'exemple avantageux illustré, l'outil de déconnection rapide 23 permet d'assurer simultanément la déconnection des deux conduites tubulaires flexibles. Toutefois, il est bien entendu que la mise en oeuvre d'outils simples permettant la déconnection simultanée d'une seule canalisation ne sort pas du cadre de la présente invention. Un tel outil permet de déconnecter une canalisation unique ou, en plusieurs opérations successives, la déconnection successive de plusieurs canalisations.

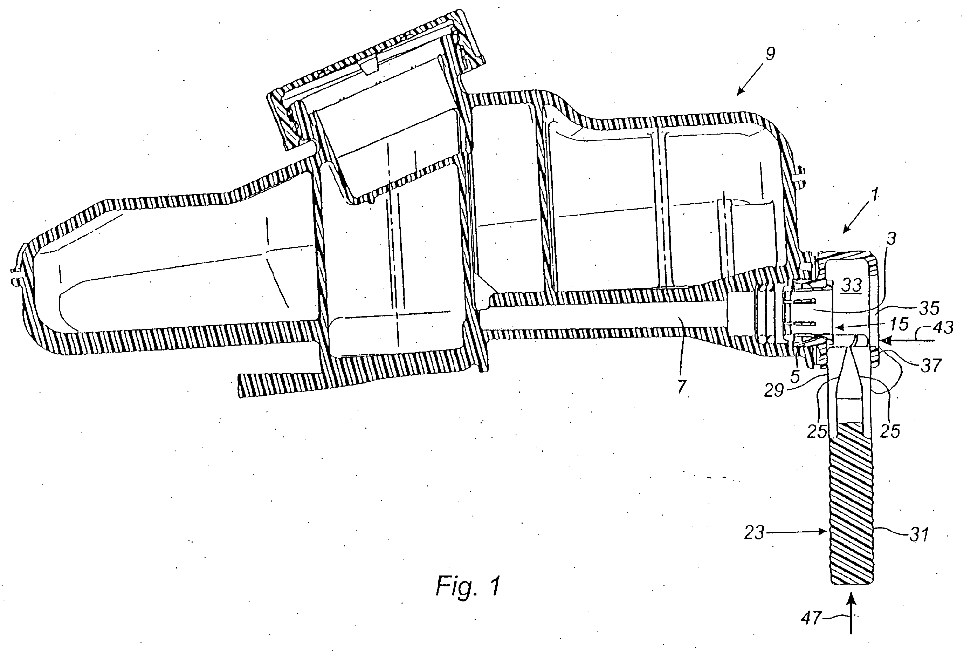

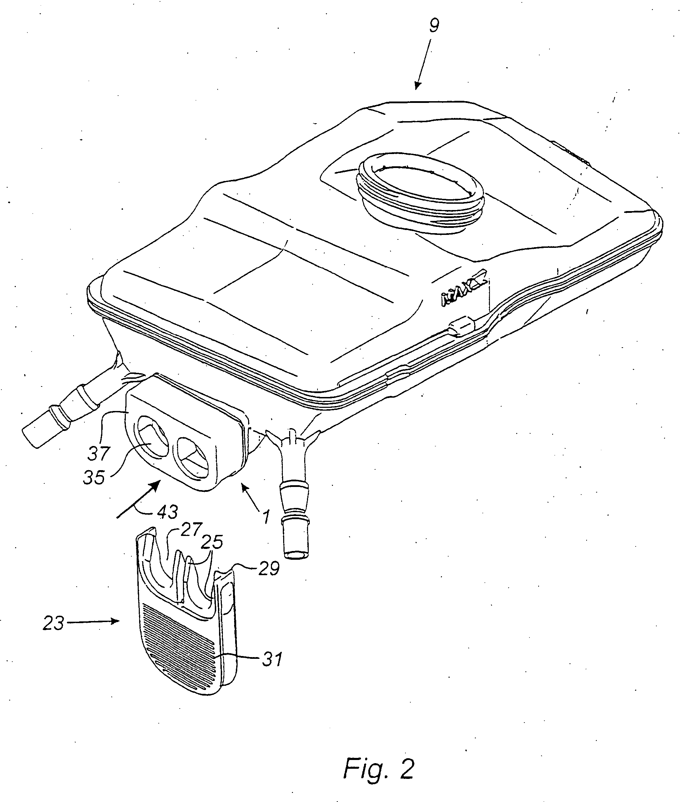

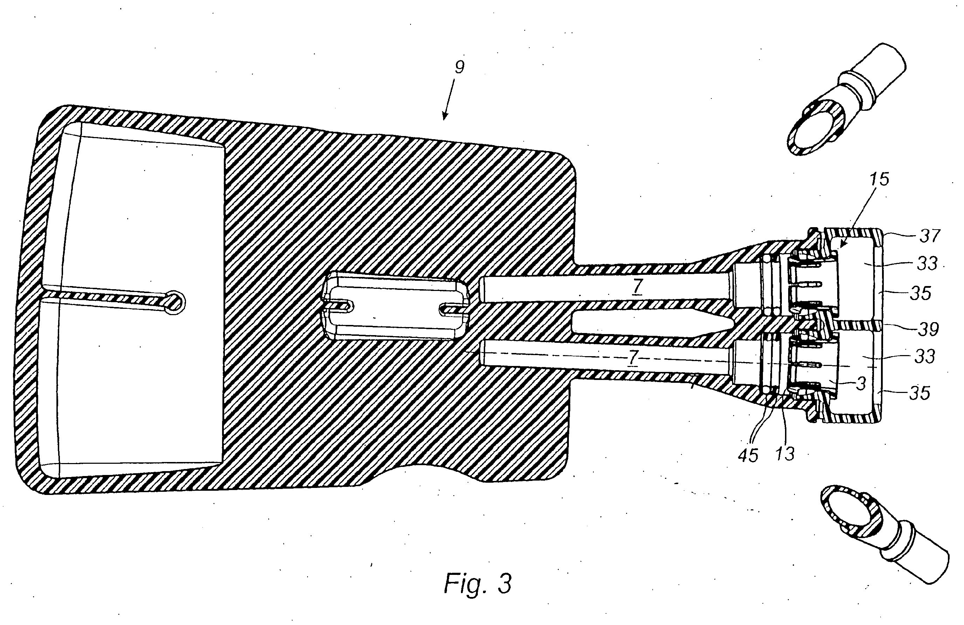

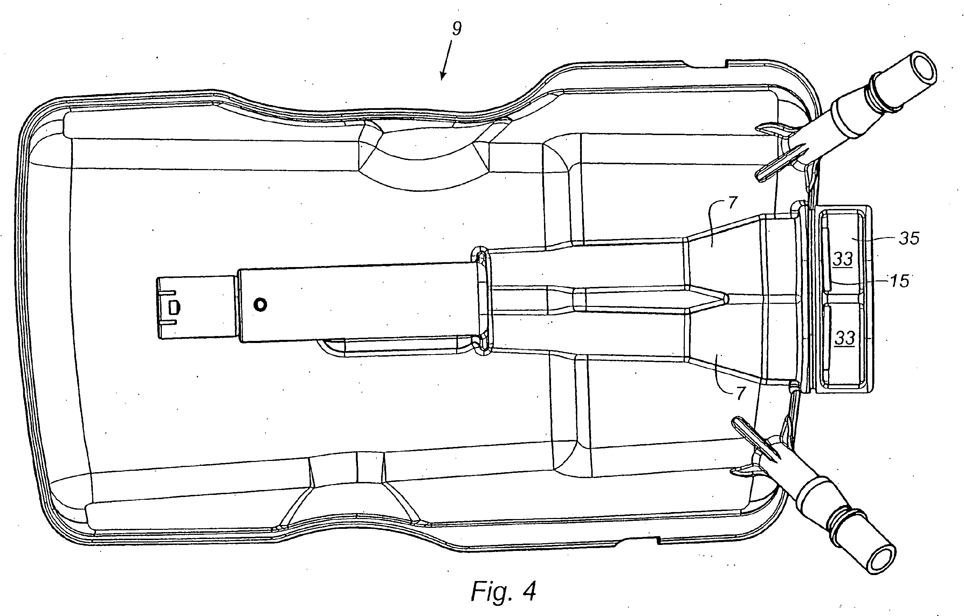

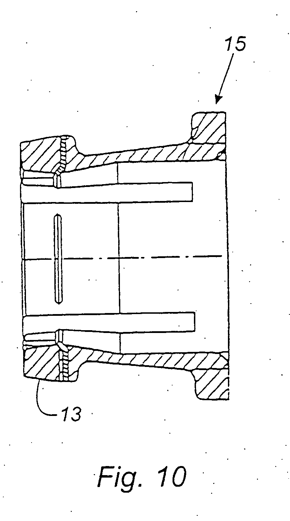

Sur les figures 1 à 4, on peut voir l'exemple préféré de réalisation d'un réservoir 9 de liquide de frein muni d'un dispositif d'interconnection selon la présente invention mettant en oeuvre des connecteurs rapides par exemple des connecteurs comportant une bague à griffes, de préférence telle que commercialisée par la société John GUEST et telle qu'illustrée sur la figure 10. Le dispositif d'interconnection comporte au moins une, de préférence deux ouvertures 3 de passage de canalisation tubulaire flexible (non illustrée).

Avantageusement, une ouverture 3 est définie par un manchon 5 dont le diamètre radialement interne est inférieur au diamètre radialement externe d'une canalisation de sortie du réservoir 9 de manière à ce que l'extrémité du manchon 5 forme un épaulement de rétention axiale d'une protubérance radiale 13 (figure 10) de la bague à griffe 15 de la figure 10.

Il est à noter que la réalisation de cet épaulement par variation du diamètre interne nécessite la mise en oeuvre d'un support de connecteur rapporté sur le réservoir 9, la réalisation d'un réservoir monobloc conduirait à une pièce non démoulable ou très difficilement démoulable.

Ainsi, le dispositif de connection selon la présente invention comporte un logement 33 de réception et de guidage de l'outil de déconnection 23 perpendiculairement à l'axe de la canalisation tubulaire flexible à déconnecter.

Dans l'exemple préféré illustré, le logement 33 a sensiblement une forme rectangulaire à angles arrondis dans la partie inférieure, du côté de son ouverture permettant l'introduction de l'outil 23. Des ouvertures 35 de passage de canalisation(s) tubulaire(s) flexible(s) sont ménagées en vis à vis des ouvertures 3 dans une face avant 37 sensiblement parallèle à la face arrière du dispositif 1 selon la présente invention. Une nervure 39 relie avantageusement les parois arrière et avant 37 entre les ouvertures 3 et 35 correspondant aux deux canalisations tubulaires flexibles.

Sur la chaîne de montage de véhicules automobiles, le réservoir 9 est solidarisé avec son support et une extrémité de canalisation tubulaire flexibles est insérée dans les ouvertures 35 et 3 selon la flèche 43, pour être enfilées dans le manchon 5 et sur la bague à griffes 15 qui en assurent l'immobilisation dans une position dans laquelle au moins un des joints 45 assure une connection étanche. La canalisation tubulaire flexible peut être connectée sur la canalisation 7 du réservoir 9 manuellement ou, en variante par un robot.

Si, par exemple pour une opération d'entretien, on désire déconnecter la ou les canalisations tubulaires flexibles avantageusement après avoir retiré le liquide de frein du réservoir 9, on introduit l'outil de déconnection 23 selon la flèche 47. Les montants 29 sont guidés par les parois internes de la chambre 33 et les rampes 25 repoussent la bague à griffes d'immobilisation 15 selon la flèche 43. Il en résulte la libération de canalisations tubulaires flexibles.

Le réservoir 9, est avantageusement réalisé en une matière plastique rigide compatible avec le liquide de frein telle que du polypropylène.

La présente invention s'applique notamment à l'industrie automobile.

La présente invention s'applique principalement au freinage.

## Revendications

1. Dispositif et outil de connection et de déconnection de canalisations tubulaires flexibles à un réservoir de liquide de frein comportant un premier logement de réception (15) d'une bague (15) d'immobilisation axiale de ladite canalisation tubulaire flexible et un second logement (33) de réception et de guidage de l'outil (23) de déconnection, perpendiculairement à l'axe de la canalisation tubulaire flexible à déconnecter, ledit outil de déconnection (23) comportant des rampes (25), axiales aptes à coopérer et à déplacer axialement ladite bague (15) de manière à libérer la canalisation tubulaire flexible.

2. Dispositif selon la revendication 1 **caractérisé en ce que** les rampes (25) de l'outil (23) de déconnection sont aptes à pousser axialement ladite bague (15) d'immobilisation de la canalisation tubulaire flexible de manière à libérer ladite canalisation tubulaire flexible.

3. Dispositif selon la revendication 1 ou 2 **caractérisé en ce que** l'outil de déconnection (23) comporte en outre des montants (29) portant lesdites rampes (25), lesdits montants (29) ayant, contrairement aux rampes (25) une épaisseur constante dans la direction axiale.

4. Dispositif selon l'une quelconque des revendications précédentes **caractérisé en ce que** l'outil de déconnection (23) est symétrique de manière à être réversible.

5. Dispositif selon l'une quelconque des revendications précédentes **caractérisé en ce que** ledit dispositif assure la connection simultanée d'au moins deux canalisations tubulaires flexibles d'axes parallèles ou sensiblement parallèles.

6. Dispositif selon la revendication 5 **caractérisé en ce qu'**il comporte un outil de déconnection (23) comportant des rampes permettant la déconnection simultanée d'au moins deux canalisations tubulaires flexibles.

7. Dispositif selon l'une quelconque des revendications précédentes **caractérisé en ce que** l'outil de déconnection (23) comporte une gorge en U bordée par lesdites rampes axiales (25).

8. Réservoir de liquide de frein **caractérisé en ce qu'**il comporte un dispositif et un outil de connection et de déconnection selon l'une quelconque des revendications précédentes.

9. Système d'alimentation en liquide de frein **caractérisé en ce qu'**il comporte au moins deux réservoirs de liquide de frein reliés par au moins une conduite tubulaire flexible connectée au moins à l'une de ses extrémités par un dispositif et un outil selon l'une quelconque des revendications 1 à 7.

10. Système selon la revendication 9 **caractérisé en ce que** les deux réservoirs sont connectés par au moins deux canalisations tubulaires flexibles.

## Claims

1. Connect/disconnect device and tool for flexible tubular pipes to/from a brake-fluid tank, comprising a first receiving cavity for a ring (15) intended for the axial retaining of said flexible tubular pipe, and a second accommodating and guiding cavity (33) for the disconnecting tool (23), perpendicularly to the axis of the flexible tubular pipe to be disconnected, said disconnecting tool (23) having axial ramps (25) capable of cooperating with said ring (15) and of moving it axially so as to release the flexible tubular pipe.

2. Device according to claim 1, **characterised in that** the ramps (25) of the disconnecting tool (23) are capable of pushing axially said ring (15) intended for the retaining of the flexible tubular pipe, so as to release said flexible tubular pipe.

3. Device according to claim 1 or 2, **characterised in that** the disconnecting tool (23) further comprises cheeks (29) carrying said ramps (25), wherein said cheeks (29) have, contrarily to the ramps (25), a constant thickness in the axial direction.

4. Device according to any one of the preceding claims, **characterised in that** the disconnecting tool (23) exhibits a symmetrical shape so as to be reversible.

5. Device according to any one of the preceding claims, **characterised in that** said device permits the simultaneous connection of a least two flexible tubular pipes having parallel or substantially parallel axes.

6. Device according to claim 5, **characterised in that** it comprises a disconnecting tool (23), including ramps for the simultaneous disconnection of at least two flexible tubular pipes.

7. Device according to any one of the preceding claims, **characterised in that** the disconnecting tool (23) has a U-shaped slot, which is edged with said axial ramps (25).

8. Brake-fluid tank, **characterised in that** it comprises a connect/disconnect device and tool according to any one of the preceding claims.

9. Brake-fluid supply system, **characterised in that** it comprises at least two brake-fluid tanks, interconnected by at least one flexible tubular pipe connected at least at one end by means of a device and a tool according to any one of claims 1 through 7.

10. System according to claim 9, **characterised in that** said two tanks are interconnected by at least two flexible tubular pipes.

## Patentansprüche

1. Vorrichtung und Werkzeug zum Anschließen und Trennen von biegsamen Rohrleitungen an einen/von einem Bremsflüssigkeitsbehälter, mit einer ersten Aufnahme (15) zum Aufnehmen eines Rings (15) zur axialen Blockierung der biegsamen Rohrleitung und einer zweiten Aufnahme (33) zum Aufnehmen und Führen des Trennwerkzeugs (23) senkrecht zur Achse der zu trennenden biegsamen Rohrleitung, wobei das Trennwerkzeug (23) axiale Rampen (25) aufweist, die mit dem Ring (15) zusammenwirken und diesen axial so verlagern können, dass die biegsame Rohrleitung freigegeben ist.

2. Vorrichtung nach Anspruch 1, **dadurch gekennzeichnet, dass** die Rampen (25) des Trennwerkzeugs (23) den Ring (15) zur Blockierung der biegsamen Rohrleitung axial so drücken können, dass die biegsame Rohrleitung freigegeben ist.

3. Vorrichtung nach Anspruch 1 oder 2, **dadurch gekennzeichnet, dass** das Trennwerkzeug (23) ferner Streben (29) aufweist, die die Rampen (25) tragen, wobei die Streben (29) im Gegensatz zu den Rampen (25) eine in axialer Richtung konstante Dicke haben.

4. Vorrichtung nach einem der vorhergehenden Ansprüche, **dadurch gekennzeichnet, dass** das Trennwerkzeug (23) symmetrisch ist, um zweiseitig zu sein.

5. Vorrichtung nach einem der vorhergehenden Ansprüche, **dadurch gekennzeichnet, dass** die Vorrichtung das gleichzeitige Anschließen von mindestens zwei biegsamen Rohrleitungen mit parallelen oder im Wesentlichen parallelen Achsen gewährleistet.

6. Vorrichtung nach Anspruch 5, **dadurch gekennzeichnet, dass** sie ein Trennwerkzeug (23) mit Rampen aufweist, die das gleichzeitige Trennen von mindestens zwei biegsamen Rohrleitungen ermöglichen.

7. Vorrichtung nach einem der vorhergehenden Ansprüche, **dadurch gekennzeichnet, dass** das Trennwerkzeug (23) eine U-förmige Nut aufweist, die von den axialen Rampen (25) umrandet ist.

8. Bremsflüssigkeitsbehälter, **dadurch gekennzeichnet, dass** er eine Vorrichtung und ein Werkzeug zum Anschließen und Trennen nach einem der vorhergehenden Ansprüche aufweist.

9. System zur Speisung mit Bremsflüssigkeit, **dadurch gekennzeichnet, dass** es mindestens zwei Bremsflüssigkeitsbehälter aufweist, die durch mindestens eine biegsame Rohrleitung verbunden sind, welche an mindestens einem ihrer Enden über eine Vorrichtung und ein Werkzeug nach einem der Ansprüche 1 bis 7 angeschlossen ist.

10. System nach Anspruch 9, **dadurch gekennzeichnet, dass** die beiden Behälter durch mindestens zwei biegsame Rohrleitungen verbunden sind.
